# DEMANDE DE BREVET EUROPEEN

(11) **EP 2 141 794 A2**
(43) Date de publication de la demande: **06.01.2010**
(21) Numéro de dépôt: 09290529.8
(22) Date de dépôt: 01.07.2009
(51) Int. Cl.: H02M 7/487

(54) **Onduleur trois niveaux**

(30) Priorité: 01.07.2008 FR 0854450
(71) Demandeur: Converteam Technology Ltd, Rugby Warwickshire CV21 1BU (GB)
(72) Inventeur: Guennegues, Virginie, 90000 Belfort (FR); Gollentz, Bernard Michel, 90000 Belfort68360 Soultz (FR)
(74) Mandataire: Neyret, Daniel Jean Marie

(57) **Abrégé**

L'invention concerne un onduleur trois niveaux comprenant deux générateurs de tension (15, 16) continue connectés en série, chacun entre un point milieu commun (17) et un point extrême (18, 19), et deux premières branches de commutation (1, 2) , chacune desdites deux premières branches de commutation étant connectée entre un des points extrêmes et un point de sortie (4) et comportant au moins un transistor IGBT (T1p, T2p, T1m, T2m) de sorte que les transistors IGBT des deux branches de commutation sont en série entre lesdits deux points extrêmes, chacun des transistors IGBT ayant une diode (5) connectée en antiparallèle.

Cet onduleur comprend une troisième branche de commutation (3) comportant deux transistors IGBT tête-bêche (TCp, TCm) ayant chacun une diode connectée en antiparallèle .

## Description

La présente invention concerne un onduleur trois niveaux, et plus particulièrement un tel onduleur comprenant deux générateurs de tension continue connectés en série, chacun entre un point milieu commun et un point extrême, et deux premières branches de commutation, chacune desdites deux premières branches de commutation étant connectée entre un des points extrêmes et un point de sortie et comportant deux transistors IGBT en série de sorte que les quatre transistors IGBT des deux branches de commutation sont en série entre lesdits deux points extrêmes, chacun des transistors IGBT ayant une diode connectée en antiparallèle.

On connaît déjà plusieurs architectures d'onduleurs de ce type.

Le document FR-A-2437102 décrit un onduleur du type NPC (clampé par le neutre) répondant à la définition précédente, dans lequel des diodes connectées au point milieu précité assurent la répartition de la tension d'entrée entre les transistors à l'état bloqué des deux premières branches de commutation.

Cette architecture présente toutefois l'inconvénient d'additionner les pertes aux différents transistors des deux premières branches de commutation. Au niveau des transistors extérieurs (situés du côté des points extrêmes), les pertes sont à la fois de commutation et de conduction, tandis qu'au niveau des transistors intérieurs (situés du côté du point de sortie), les pertes sont de conduction du fait que ces derniers transistors ne commutent pas dans le mode de fonctionnement le plus usuel (à savoir, puissance transitée depuis le bus continu vers la charge inductive).

On connaît un autre type d'architecture telle que rappelée ci-dessus. Le document US-A-5737201 décrit un convertisseur multicellulaire série dans lequel un condensateur est connecté entre les points de jonction entre les deux transistors de chacune des premières branches de commutation. Pour des raisons technologiques, de telles structures sont toutefois généralement peu rentables.

La présente invention vise à palier ces inconvénients.

Plus particulièrement, l'invention a pour but de fournir une nouvelle topologie de convertisseur trois niveaux qui permette soit de doubler la fréquence de commutation à courant constant, soit de doubler le courant à fréquence de commutation constante.

A cet effet, l'invention a tout d'abord pour objet un onduleur trois niveaux comprenant deux générateurs de tension continue connectés en série, chacun entre un point milieu commun et un point extrême, et deux premières branches de commutation, chacune desdites deux premières branches de commutation étant connectée entre un des points extrêmes et un point de sortie et comportant deux transistors IGBT en série de sorte que les quatre transistors IGBT des deux branches de commutation sont en série entre lesdits deux points extrêmes, chacun des transistors IGBT ayant une diode connectée en antiparallèle, cet onduleur comprenant :
- une troisième branche de commutation comportant deux transistors IGBT tête-bêche ayant chacun une diode connectée en antiparallèle ; et ;
- des moyens pour assurer la commutation simultanée des deux transistors IGBT en série de chacune desdites deux premières branches de commutation.

Dans un mode de réalisation particulier, lesdits moyens pour assurer la commutation simultanée des deux transistors IGBT en série de chacune desdites deux premières branches de commutation comprennent des moyens d'élaboration d'un signal correctif de commande d'un des deux transistors IGBT en série, en fonction de la différence d'évolution temporelle de la tension aux bornes de conduction desdits deux transistors IGBT en série.

Un tel agencement est connu en soi et décrit dans le document FR-A-2900289.

On décrira maintenant, à titre d'exemple non limitatif, un mode de réalisation particulier de l'invention, en référence aux dessins schématiques annexés dans lesquels :
- la figure 1 est schéma électrique d'un onduleur selon l'invention ;
- les figures 2a à 2f illustrent le fonctionnement de l'onduleur de la figure 1 ; et
- la figure 3 illustre le fonctionnement de l'onduleur de la figure 1 par rapport à celui d'un onduleur 3 niveaux conventionnel.

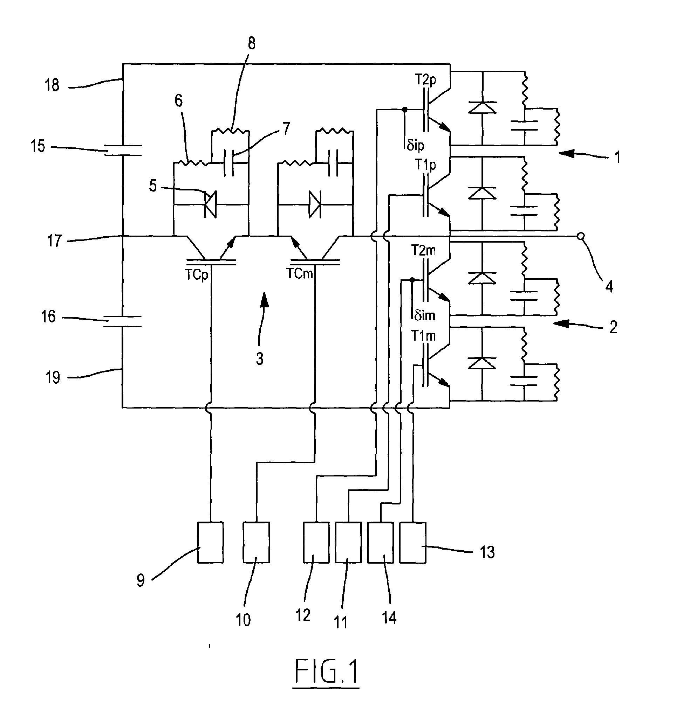

Comme montré à la figure 1, l'onduleur comprend deux branches latérales 1 et 2 et une branche centrale 3.

Les deux branches latérales 1 et 2 sont identiques et comportent chacune deux IGBT T1 p, T2p et T1 m, T2m respectivement, reliés en série et connectés dans le même sens. Les branches 1 et 2 sont elles-mêmes toutes deux reliées à un point de sortie 4 de telle sorte que les quatre IGBT sont en série et connectés dans le même sens.

La branche centrale 3 comporte pour sa part deux IGBT TCp, TCm montés tête-bêche. Cette branche centrale est également connectée à une de ses extrémités au point de sortie 4.

Une diode 5 est montée en antiparallèle sur chaque IGBT.

Dans le mode de réalisation qui est ici représenté, on prévoit en outre un circuit comportant une résistance 6 en série avec un condensateur 7 est monté en parallèle sur chaque diode 5, une deuxième résistance 8 étant montée en parallèle sur le condensateur 7. Ces circuits permettent d'éviter des courants de queue différents lors de l'ouverture des IGBT. Il est également possible de ne prévoir de tels circuits qu'en parallèle sur les IGBT T1 p, T2p, T1 m et T2m, à l'exclusion des IGBT TCp et TCm.

Les IGBT TCp et TCm sont commandés par des circuits d'excitation 9 et 10 respectivement et les IGBT T1 p, T2p, T1 m et T2m sont commandés par des circuits d'excitation 11, 12, 13 et 14 respectivement.

Deux condensateurs 15 et 16 formant sources de tension sont reliés en série en un point milieu 17. Les branches de l'onduleur sont connectées de la manière suivante à ces condensateurs.

L'extrémité de la branche 3 opposée au point de sortie 4 est connectée au point 17. Les extrémités des branches 1 et 2 opposées au point de sortie 4 sont connectées aux points d'extrémité 18 et 19 respectivement de l'ensemble de condensateurs 15 et 16.

Afin que les IGBT T1p et T2p d'une part, et T1 m et T2m d'autre part, commutent simultanément, des signaux correctifs de commande δip, δim respectivement, sont appliqués aux IGBT T2p et T2m, comme décrit dans le document FR-A-2900289 précité.

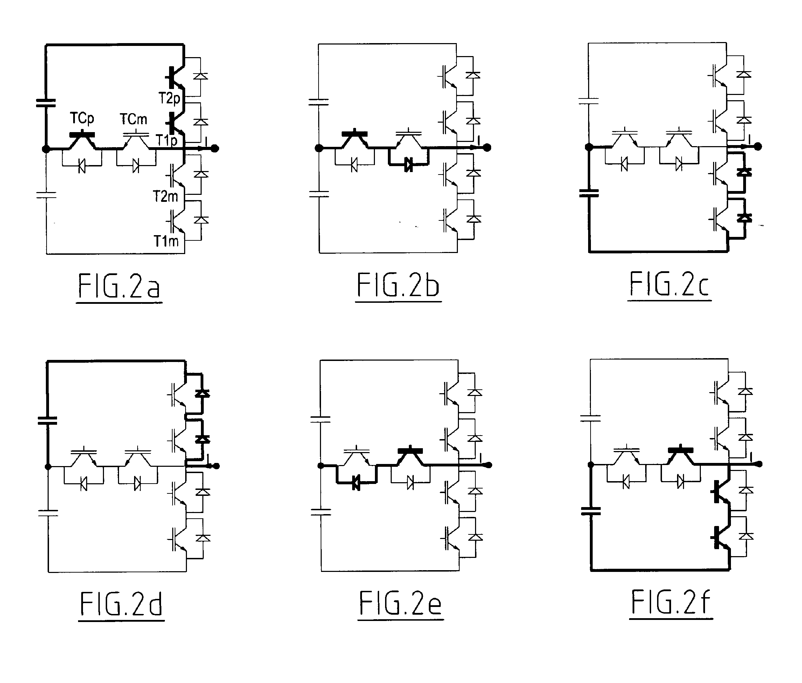

On voit sur la figure 2 la séquence de conduction des IGBT et des diodes.

T1p et T2p commutent toujours ensemble, de même que T1m et T2m. Quand T1 p et T2p sont fermés, TCm est ouvert et inversement, quand T1 m et T2m sont fermés, TCp est ouvert.

Lorsque l'on désire une tension de sortie de 1, T1p et T2p ainsi que TCp sont fermés. TCp se ferme alors qu'aucun courant le traverse de sorte qu'aucune perte ne lui est associée. TCm se comporte de la même manière dans le cas d'un courant de charge négatif.

Si Vdc/2 est la tension aux bornes de chacun des condensateurs 15 et 16, la tension de commutation de T1 p et T2p est égale à Vdc/4 contrairement à un onduleur 3 niveaux NPC conventionnel où cette tension de commutation est de Vdc/2. Les pertes par commutation dans ces composants sont donc divisées par 2 ce qui permet de doubler la fréquence de commutation sans augmenter les pertes, et donc d'améliorer les formes d'onde en sortie.

La SOA (Safe Operating Area) est améliorée puisque la tension de commutation est diminuée.

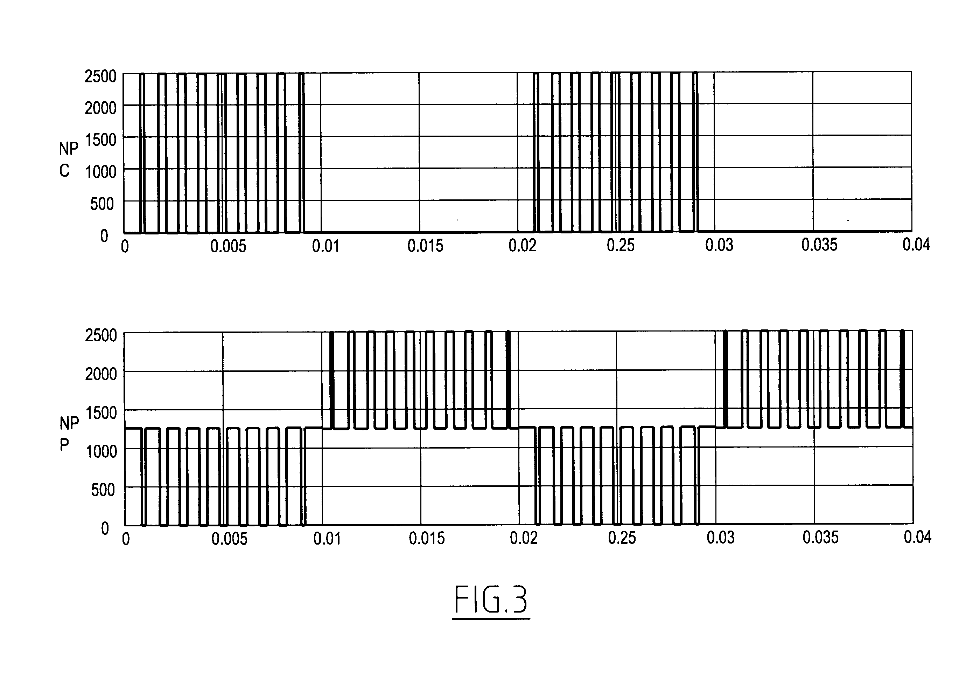

On voit sur la figure 3 les tensions aux bornes de l'IGBT T2p dans le cas d'un onduleur NPC conventionnel (haut) et dans le cas de l'invention (bas). La tension commutée est deux fois moins élevée dans l'invention. Cependant, les formes d'onde en sortie sont les mêmes.

Lorsque T1 p, T2p et TCp sont fermés, et que T1 m, T2m et TCm sont ouverts, la tension de sortie est de 1, ou autrement dit la tension de sortie est égale à Vdc/2.

Lorsque T1 p, T2p, T1 m et T2m sont ouverts, et que TCp et TCm sont fermés, la tension de sortie est égale à 0.

Lorsque T1m, T2m et TCm sont fermés, T1p, T2p et TCp étant ouverts, la tension de sortie est de -1, ou autrement dit la tension de sortie est égale à -Vdc/2.

La branche centrale 3 forme un interrupteur bidirectionnel propre à commander le niveau 0 de tension de sortie. La branche centrale 3 est commandée par les circuits d'excitation 9 et 10, de sorte que la tension de sortie est à l'état 0, c'est-à-dire sensiblement égale à 0 volt, pendant une durée non négligeable. Autrement dit, l'état 0 de la tension de sortie n'est pas un état transitoire. La tension de sortie est égale à 0 pendant une durée qui est par exemple en moyenne sensiblement égale à la durée des états 1 ou -1 de la tension de sortie.

Les signaux de commande délivrés par les circuits d'excitation 9, 10, 11, 12, 13 et 14 aux IGBT TCp, TCm, T1p, T2p, T1m et T2m respectivement, permettent ainsi d'obtenir trois niveaux de sortie stables -1, 0 et 1, correspondant respectivement à une tension de sortie égale -Vdc/2, 0 et Vdc/2, formant ainsi un onduleur trois niveaux.

## Revendications

1. Onduleur trois niveaux comprenant deux générateurs de tension (15, 16) continue connectés en série, chacun entre un point milieu commun (17) et un point extrême (18, 19), et deux premières branches de commutation (1, 2), chacune desdites deux premières branches de commutation étant connectée entre un des points extrêmes et un point de sortie (4) et comportant au moins un transistor IGBT (T1 p, T2p, T1 m, T2m) de sorte que les transistors IGBT des deux branches de commutation sont en série entre lesdits deux points extrêmes, chacun des transistors IGBT ayant une diode (5) connectée en antiparallèle, **caractérisé par le fait qu'**il comprend une troisième branche de commutation (3) comportant deux transistors IGBT tête-bêche (TCp, TCm) ayant chacun une diode connectée en antiparallèle.

2. Onduleur selon la revendication 1, dans lequel chacune desdites deux premières branches de commutation comporte deux transistors IGBT (T1p, T2p, T1m, T2m) en série, l'onduleur comprenant en outre des moyens (11-14) pour assurer la commutation simultanée des deux transistors IGBT en série de chacune desdites deux premières branches de commutation.

3. Onduleur selon la revendication 2, dans lequel lesdits moyens pour assurer la commutation simultanée des deux transistors IGBT en série de chacune desdites deux premières branches de commutation comprennent des moyens d'élaboration d'un signal correctif (δip, δim) de commande d'un des deux transistors IGBT en série, en fonction de la différence d'évolution temporelle de la tension aux bornes de conduction desdits deux transistors IGBT en série.
